# EUROPEAN PATENT SPECIFICATION

(11) **EP 2 393 974 B1**
(45) Date of publication and mention of the grant of the patent: **19.07.2017**
(21) Application number: 10738695.5
(22) Date of filing: 27.01.2010
(51) Int. Cl.: D06F 58/20, F26B 21/08

(54) **HEAT PUMP MODULE AND DRYING APPARATUS USING HEAT PUMP MODULE**
WÄRMEPUMPENMODUL UND TROCKENVORRICHTUNG, WELCHE EIN SOLCHES VERWENDET
MODULE DE POMPE À CHALEUR ET APPAREIL DE SÉCHAGE UTILISANT LE MODULE DE POMPE À CHALEUR

(30) Priority: 05.02.2009 KR 20090009374
(43) Date of publication of application: 14.12.2011
(73) Proprietor: LG Electronics Inc., Seoul 150-721 (KR)
(72) Inventor: KIM, Na Eun, Seoul 153-802 (KR); KO, Cheol Soo, Seoul 153-802 (KR); KIM, Young Min, Seoul 153-802 (KR)
(74) Representative: Vossius & Partner Patentanwälte Rechtsanwälte mbB
(86) International application number: PCT/KR2010/000487
(87) International publication number: WO 2010/090411

(56) References cited:
- EP-A2- 1 813 877
- WO-A1-2007/013277
- CN-A- 101 092 784
- JP-A- 2007 330 439
- JP-A- 2007 330 439
- JP-A- 2008 284 071
- JP-A- 2009 018 089
- US-A- 5 904 053
- US-A1- 2001 037 630

## Description

### Background Art

Generally, a drying apparatus is a home appliance that conventionally dries washed laundry, or other objects to be dried, using high temperature air. The general apparatus may include a drying tub (conventionally, referred to as a drum) in which an object to be dried is received, a drive source that rotates the drum, a heating device that creates high temperature air by heating air introduced into the drum, and a blower unit that sucks or discharges the air into or from the drum.

Drying apparatuses may be classified, according to a type of air heating method, that is, according to a type of heating device, such as an electric drying device or a gas drying device. The electric drying device heats air by using electric resistance heat generated by an electric heater. The gas drying apparatus heats air by using gas combustion heat generated by a gas burner.

Drying apparatuses may also be classified into, for example, a condensing (circulating) drying apparatus or a blowing drying apparatus. In the blowing drying apparatus, highly humid air inside a drum, generated via heat exchange with an object to be dried, may be directly discharged out of the drying apparatus. In the condensing drying apparatus, highly humid air, generated via heat exchange with an object to be dried, may be circulated within a drum rather than being discharged out of the drying apparatus, drying the object via dehumidification and heating of the circulating air. In the case of the condensing drying apparatus, when the highly humid air generated via heat exchange with the object to be dried is condensed, moisture contained in the highly humid air is discharged as condensed water, and therefore, the condensing drying apparatus may need a device for removal of the condensed water.
JP2007330439A relates to A container type tank constituted in a roughly closed state to collect and reserve the dehumidified water produced by an evaporator which is the heat exchanger and a drainage pump to discharge the dehumidified water reserved in this tank are provided out of a route of a circulating duct, and a filter to catch the foreign matter in the dehumidified water is arranged in the tank.

JP2008284071A relates to a washing/drying machine including a washing tub rotatably supported in a water tub of a housing for washing-drying clothes, and drying means for introducing warm air heated by a heat pump unit, which is disposed below the water tub and has a compressor, the condenser and an evaporator, into the washing tub by a fan device, and having a drain tank for storing water falling from the evaporator and the condenser of the heat pump unit, and a water passage for falling water to the drain tank side below the condenser.

CN 101 092 784 A relates to washing drier, which is characterized in that the washing drier washes and dries the clothes contained in the cylinder and is provided with a fan device for guiding the hot wind heated by the heating source to the cylinder when drying, wherein the cylinder can be rotatably supported inside the water groove in the basket body; the fan device is composed of a feeding fan, a fan cover and a motor for driving the feeding fan; the arrangement is longitudinal that leads the suction inlet opening on transverse direction; a drain opening is arranged at the lower part of the fan cover; a water storage part is disposed in the water draining path below the drain opening.

JP2009018089A relates to correctly detecting the water level of an internal water storage part and a first sensor chamber being arranged on the outside of a ventilation passage and being connected to the internal water storage part in the ventilation passage via a water passage part.

WO2007013277 A1 relates to a warm air inlet and a warm air outlet of a laterally provided cylindrical water tub being separately arranged in the direction of the axis of the water tub.

US2001/037630A1 relates to a dehumidifier housing including a lower housing having a barrier part fitted vertically between a compressor and a water tank inside of a cabinet, a drain part formed in a horizontal direction above the barrier part for collecting condensate dehumidified at a heat exchanger and draining the water tank, and sidewalls formed at both sides of the barrier part and the drain part in a front and rear direction and supported on an inside of the cabinet, an upper housing having an orifice part with an air flow hole in a central portion, and a rim part around the orifice part in front and rear direction and supported on an inside of the cabinet, and coupling means for coupling the lower housing and the upper housing, thereby enhancing rigidity and dehumidifying effect.

EP 1813 877 A2 relates to an indoor unit of an air conditioner which has a heat exchanger, and a drain pan arranged beneath the heat exchanger, to drain condensed water.

US 5904053A relates to A refrigeration system including an evaporator coil with a drain pan having alternative drain openings which receive movable primary and secondary drain plugs.

### Disclosure of Invention

### Technical Problem

Accordingly, the present invention is directed to a heat pump module and a drying apparatus using the heat pump module that substantially obviate one or more problems due to limitations and disadvantages of the related art.

An object of the present invention is to provide a heat pump module for drying clothes and a drying apparatus having the same.

Another object of the present invention is to provide a heat pump module capable of easily removing condensed water formed on a surface of an evaporator and a drying apparatus having the heat pump module.

A further object of the present invention is to provide a heat pump module capable of easily discharging condensed water collected from an evaporator and a drying apparatus having the heat pump module.

### Solution to Problem

Embodiments, as embodied and broadly described herein, may include a heat pump module comprising a housing, an evaporator provided in the housing that serves to condense air introduced into the housing via evaporation of refrigerant, a condenser provided in the housing that serves to heat the air having passed through the evaporator via condensation of the refrigerant, and a condensed water remover or guide provided in the housing that serves to remove condensed water generated on a surface of the evaporator therefrom while coming into contact with a lower surface of the evaporator.

The housing may further include a condensed water reservoir indented or extended from the lower surface of the evaporator to store the condensed water removed via the condensed water remover. The condensed water remover may take the form of a condensed water guide vertically extending between a bottom surface of the condensed water reservoir and the lower surface of the evaporator.

The housing may further include a drain part to discharge the condensed water, stored in the condensed water reservoir, out of the housing. The condensed water guide may include a communication part to allow the condensed water to be movable to the drain part.

The heat pump module may further include a condensed water reservoir provided in the housing and indented from the lower surface of the evaporator and a lower surface of the condenser, the condensed water reservoir serving to store the condensed water removed via the condensed water remover. The condensed water remover may take the form of a guide plate located above the condensed water reservoir to come into contact with the lower surface of the evaporator and the lower surface of the condenser.

The guide plate may include a filtering part to filter foreign substances contained in the condensed water and to allow the condensed water, from which the foreign substances have been filtered, to be collected in the condensed water reservoir. The filtering part may be positioned only at a region of the guide plate which comes into contact with the lower surface of the evaporator.

The guide plate may further include a barrier hole positioned between the evaporator and the condenser and serving to prevent the condensed water from coming into contact with the condenser. The filtering part may include a filtering hole, and the barrier hole may have a larger diameter than a diameter of the filtering hole.

In accordance with another embodiment, a drying apparatus may be provided which may include a drying space, in which laundry is dried, a housing that communicates with the drying space, an evaporator provided in the housing that serves to condense highly humid air introduced from the drying space into the housing via evaporation of refrigerant, a condenser provided in the housing that serves to heat the air having passed through the evaporator via condensation of the refrigerant, a fan provided in the housing that serves to introduce the air having passed through the condenser into the drying space, and a condensed water remover provided in the housing that serves to remove condensed water generated on a surface of the evaporator therefrom while coming into contact with a lower surface of the evaporator.

### Advantageous Effects of Invention

Embodiments disclosed herein are directed to a heat pump module and a drying apparatus using the heat pump module that substantially obviate one or more problems due to limitations and disadvantages of the related art.

That is, embodiments disclosed herein provide a heat pump module for drying clothes and a drying apparatus having the same.

Further, embodiments disclosed herein provide a heat pump module capable of easily removing condensed water formed on a surface of an evaporator and a drying apparatus having the heat pump module.

Additionally, embodiments disclosed herein provide a heat pump module capable of easily discharging condensed water collected from an evaporator and a drying apparatus having the heat pump module.

### Brief Description of Drawings

Embodiments will be described in detail with reference to the following drawings in which like reference numerals refer to like elements, and wherein:
FIG. 1 is a perspective view of a heat pump module according to an embodiment;
FIG. 2 is a perspective view of a housing according to an embodiment;
FIG. 3 is a sectional view taken along the line III-III of FIG. 2;
FIG. 4 is a sectional view taken along the line IV-IV of FIG. 2;
FIG. 5 is a perspective view of a heat pump module according to another embodiment;
FIG. 6 is a perspective view of a housing according to another embodiment;
FIG. 7 is an exploded perspective view of FIG. 6;
FIG. 8 is a sectional view taken along the line XIII- XIII of FIG. 7;
FIG. 9 is a sectional view taken along the line IX-IX of FIG. 7;
FIG. 10 is a conceptual view of a drying apparatus including the heat pump module of FIG. 1; and
FIG. 11 is a conceptual view of a drying apparatus including the heat pump module of FIG. 5.

### Best Mode for Carrying out the Invention

Reference will now be made in detail to the embodiments, examples of which are illustrated in the accompanying drawings. So long as being not specially defined, all terms in the context of describing the invention embodiments may be commonly understood by those skilled in the art to have the same meaning as the general meaning, or may be dedicatedly defined in the specification when having a specific meaning conflicting with the general meaning thereof.

Wherever possible, like reference numbers have been used throughout the drawings to refer to the same or like parts. It will be understood that the structure and operation of the embodiments will be described only by way of example and therefore the technical scope is not limited to the embodiments.

Generally, a drying apparatus is a home appliance that conventionally dries washed laundry, or other objects to be dried, using high temperature air. The general apparatus may include a drying tub (conventionally, referred to as a drum) in which an object to be dried is received, a drive source that rotates the drum, a heating device that creates high temperature air by heating air introduced into the drum, and a blower unit that sucks or discharges the air into or from the drum.

Drying apparatuses may be classified, according to a type of air heating method, that is, according to a type of heating device, such as an electric drying device or a gas drying device. The electric drying device heats air by using electric resistance heat generated by an electric heater. The gas drying apparatus heats air by using gas combustion heat generated by a gas burner.

Drying apparatuses may also be classified into, for example, a condensing (circulating) drying apparatus or a blowing drying apparatus. In the blowing drying apparatus, highly humid air inside a drum, generated via heat exchange with an object to be dried, may be directly discharged out of the drying apparatus. In the condensing drying apparatus, highly humid air, generated via heat exchange with an object to be dried, may be circulated within a drum rather than being discharged out of the drying apparatus, drying the object via dehumidification and heating of the circulating air. In the case of the condensing drying apparatus, when the highly humid air generated via heat exchange with the object to be dried is condensed, moisture contained in the highly humid air is discharged as condensed water, and therefore, the condensing drying apparatus may need a device for removal of the condensed water.

Embodiments disclosed herein show a heat pump module and drying apparatus having the same, as examples. However, the invention may be employed in any home appliance or device in which the removal of condensed water or fluid may be advantageous.

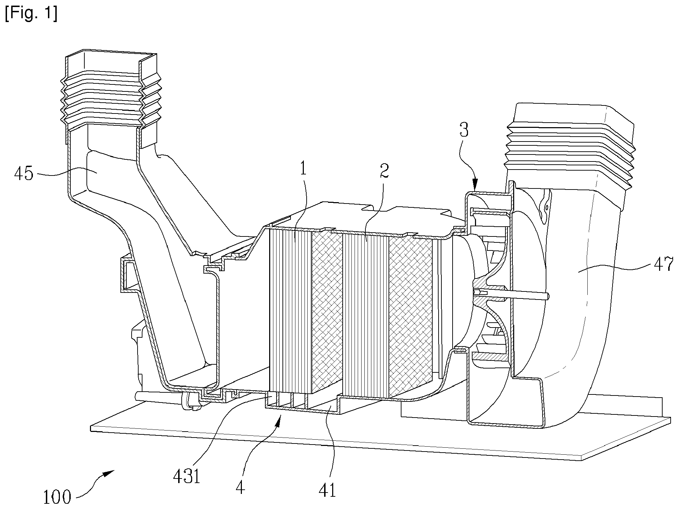

FIG. 1 is a perspective view of a heat pump module according to an embodiment of the present invention. The heat pump module 100 of Fig. 1 may include an evaporator 1, a condenser 2, a fan 3, and a housing 4.

The evaporator 1 may serve to evaporate refrigerant, so as to condense air flowing in an interior of the heat pump module 100. When the refrigerant is evaporated in the evaporator 1, the refrigerant may absorb heat from the air flowing in the interior of the heat pump module 100, thereby acting to condense the air passing through the heat pump module 100. The evaporator 1 may be positioned at an entrance side of the housing 4, through which air may be introduced into the heat pump module 100.

The condenser 2 may serve to condense the refrigerant, so as to heat the air flowing in the interior of the heat pump module 100. When the refrigerant is condensed in the condenser 2, the refrigerant emits heat. The air passing through the condenser 2 may be heated by absorbing the heat emitted from the refrigerant while flowing in the interior of the heat pump module 100. The condenser 2 may be positioned to heat the air that flows in the interior of the heat pump module 100 after having passed through the evaporator 1, and thus, may be positioned at an exit side of the housing 4.

The fan 3 may serve to forcibly flow the air into the heat pump module 100 and may be installed in the housing 4. The housing 4 may be configured to maintain the evaporator 1, the condenser 2, and the fan 3 at or in fixed positions, and may provide an air path to introduce air into the heat pump module 100 and discharge air, having undergone heat exchange with the refrigerant, from the heat pump module 100.

The housing 4 may be connected, at one side thereof, to or may include an inlet duct 45 for introduction of air thereto, and may be connected, at an other side thereof, to or may include an outlet duct 47 for discharge of heat-exchanged air. The evaporator 1 and the condenser 2 may be sequentially arranged following the inlet duct 45. In addition, the evaporator 1 and the condenser 2 may be spaced apart from each other by a predetermined distance, enabling condensation and heating of the air passing through the housing 4.

The fan 3 may be arranged between the condenser 2 and the outlet duct 47. This arrangement may facilitate introduction/discharge of air through the inlet duct 45 and the outlet duct 47.

In the heat pump module 100 having the above described configuration, when air is introduced through one side of the housing 4 and undergoes heat exchange in the evaporator 1, moisture may be removed from the air introduced into the housing 4, forming condensed water on a surface of the evaporator 1. The condensed water formed on the surface of the evaporator 1 may disadvantageously deteriorate heat exchange efficiency of the air introduced into the housing 4, and also, may remain on a bottom surface of the housing 4. In particular, if the heat pump module 100 is received in a hermetically sealed space of a drying apparatus, the condensed water remaining on the bottom surface of the housing 4 may cause undesirable sanitary problems. Therefore, removal of the condensed water is very important in a home appliance, such as a drying apparatus, including an evaporator mounted in a hermetically sealed space thereof. Although one might consider providing the housing 4 with a drain configuration (for example, a drain hole), the condensed water formed on a lower surface of the evaporator 1 may have difficulty separating from the lower surface of the evaporator 1 due to surface tension thereof.

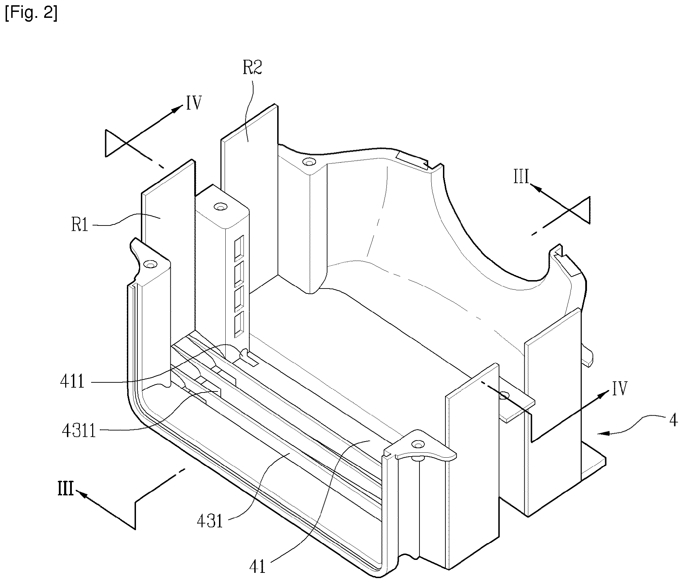

To solve the above described problem, the housing 4 provided in the heat pump module 100 according to an embodiment may include a condensed water reservoir 41 and a condensed water remover in the form of a condensed water guide 431. Hereinafter, the condensed water reservoir 41 and the condensed water guide 431 of the housing 4 according to embodiments will be described in detail with reference to FIGS. 2 to 4.

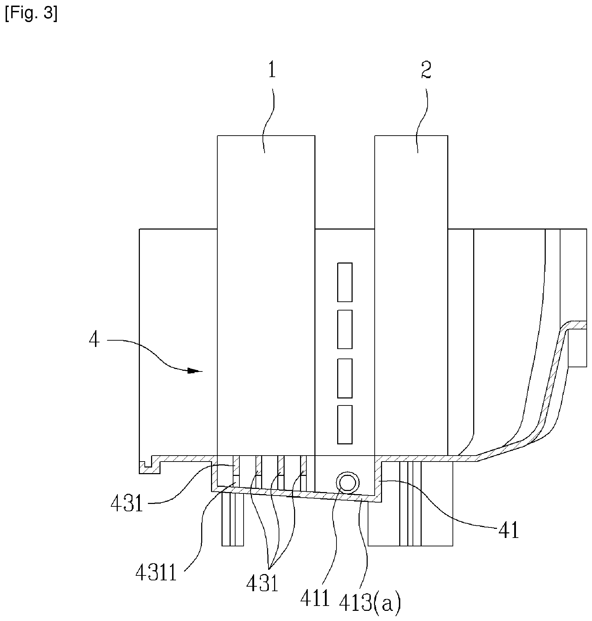

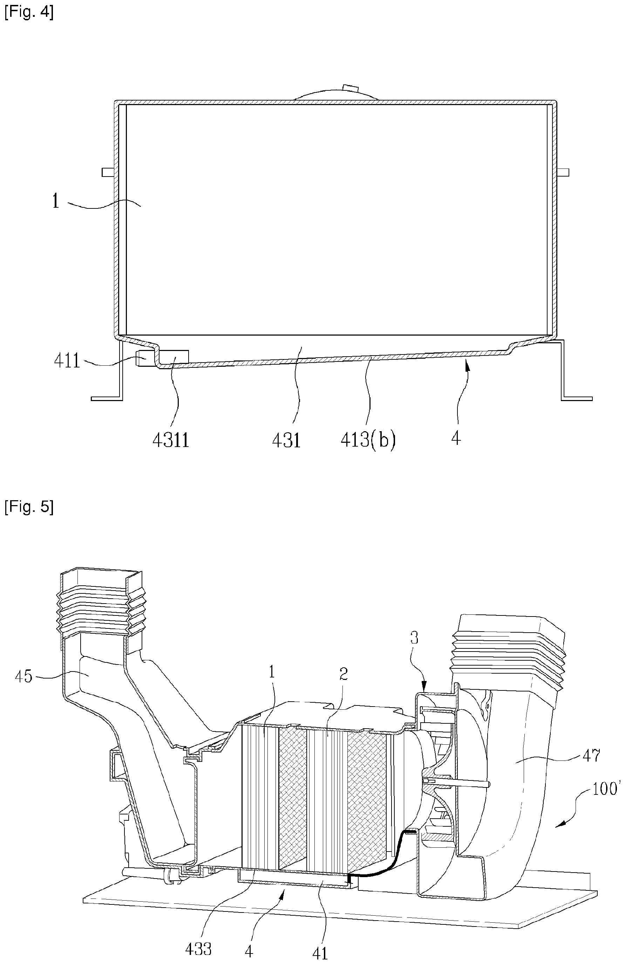

FIG. 2 is a perspective view of a housing according to an embodiment. FIG. 3 is a sectional view taken along the line III-III of FIG. 2, and FIG. 4 is a sectional view taken along the line IV-IV of FIG. 2.

Referring to FIG. 3, the condensed water reservoir 41 of the housing 4 may be indented or extend from the lower surface of the evaporator 1 and may be configured to store the condensed water formed on the evaporator 1. The condensed water reservoir 41 may be formed only at the lower surface of the evaporator 1. This is because the evaporator 1 is where the air flowing through the interior of the heat pump module 100 is dehumidified, causing generation of condensed water.

The housing 4 may further include a drain part 411 formed at one side of the condensed water reservoir 41 to discharge the condensed water collected from the evaporator 1. Thereby, the condensed water stored in the condensed water reservoir 41 may be discharged out of the housing 4.

A bottom surface of the condensed water reservoir 41 may be inclined or sloped downward toward the drain part 411 by a predetermined angle. This serves to easily discharge the condensed water collected in the condensed water reservoir 41 out of the housing 4.

A slope defined at the condensed water reservoir 41 may be configured as shown in FIG. 3, such that a slope 413a extends in a longitudinal direction of the housing 4, or may be configured as shown in FIG. 4, such that a slope 413b extends in a transversal direction of the housing 4. Alternatively, slopes may extend in the longitudinal direction and the transversal direction of the housing 4. When the slope 413a and/or 413b are/is provided, for drainage of the condensed water, the drain part 411 may be located at a lowest position of the slope 413a or 413b.

Hereinafter, the condensed water remover in the form of the condensed water guide 431 will be described with reference to FIGs. 2 and 3. Referring to FIG. 2, the condensed water guide 431 may extend vertically formed between the bottom surface of the condensed water reservoir 41 and the lower surface of the evaporator 1. Further, the condensed water guide 431 may contact, at one side thereof, the bottom surface of the evaporator 1, and at the other side thereof, the bottom surface of the condensed water reservoir 41.

If one side of the condensed water guide 431 is disposed adjacent to or contacts the lower surface of the evaporator 1, the removal of the condensed water via the condensed water guide 431 may be facilitated when the condensed water forms on the surface of the evaporator 1 and moves to the lower surface of the evaporator 1. Also, since the other side of the condensed water guide 431 may be disposed adjacent to or contact with the bottom surface of the condensed water reservoir 41, the condensed water moved to the condensed water guide 431 may move to the bottom surface of the condensed water reservoir 41 by via gravity.

A plurality of condensed water guides 431 may be provided, so as to serve not only to remove the condensed water formed on the evaporator 1, but also to function as supports for the evaporator 1. The condensed water guide(s) 431 may be provided with a communication part 4311, to allow the condensed water collected on the bottom surface of the condensed water reservoir 41 to be moved to the drain part 411 along the slope 413a. Although FIGs. 2 to 4 illustrate a communication part in the form of a hole, the condensed water guide(s) 431 may be spaced apart from a sidewall of the condensed water reservoir 41 by a predetermined distance to define a communication gap therebetween.

The condenser 2 may be separated from the condensed water guide(s) 431 and the condensed water reservoir 41 disposed adjacent to the evaporator 1. That is, the condenser 2 may serve to heat the air flowing in the interior of the heat pump module 100, and therefore, may have deterioration in efficiency if the condenser 2 comes into contact with the condensed water removed from the evaporator 1.

The housing 4 according to an embodiment, as shown in FIG. 2, may include fitting portions R1 and R2 that maintain the evaporator 1 and the condenser 2 at fixed positions, respectively. This may improve assembly efficiency of the heat pump module 100.

Hereinafter, operational relationships of the above described elements of the heat pump module 100 according to this embodiment of the present invention will be described.

Referring to FIG. 1, if the heat pump module 100 is operated for the purpose of drying air, the fan 3 may be operated, causing air to be introduced into the housing 4 through the inlet duct 45. When the air introduced into the housing 4 undergoes heat exchange in the evaporator 1, the air may be deprived of moisture, causing condensed water to be formed on the surface of the evaporator 1. The condensed water formed on the surface of the evaporator 1 may be moved to the bottom surface of the housing 4 along the condensed water guide(s) 431, which may be disposed adjacent to or in contact the lower surface of the evaporator 1, thereby being collected in the condensed water reservoir 41. In this case, the condensed water stored in the condensed water reservoir 41 may be moved toward the drain part 411 of the housing 4 along the slope 413b of FIG. 4.

Alternatively, the condensed water stored in the condensed water reservoir 41 may be moved toward the drain part 411 along the slope 413a of FIG. 3 by passing through the communication part 4311 formed in the condensed water guide 431. In this way, the condensed water collected in the condensed water reservoir 41 of the housing 4 may be discharged out of the housing 4 through the drain part 411.

As will be appreciated from FIG. 1, under operation of the fan 3, the heat-exchanged air having passed through the evaporator 1 may be introduced into the condenser, 2, and then, may be discharged out of the heat pump module 100 through the outlet duct 47 after being heated.

FIG. 5 is a perspective view of a heat pump module according to another embodiment. The heat pump module 100' according to this embodiment may include the evaporator 1, the condenser 2, the fan 3, and the housing 4. The evaporator 1, the condenser 2, and the fan 3 may have the same configurations as the previously described embodiment of FIG. 1, and thus, a detailed description thereof has been omitted. Hereinafter, only a configuration of the housing 4 different from the previously described embodiment of FIGS. 1-4 will be described.

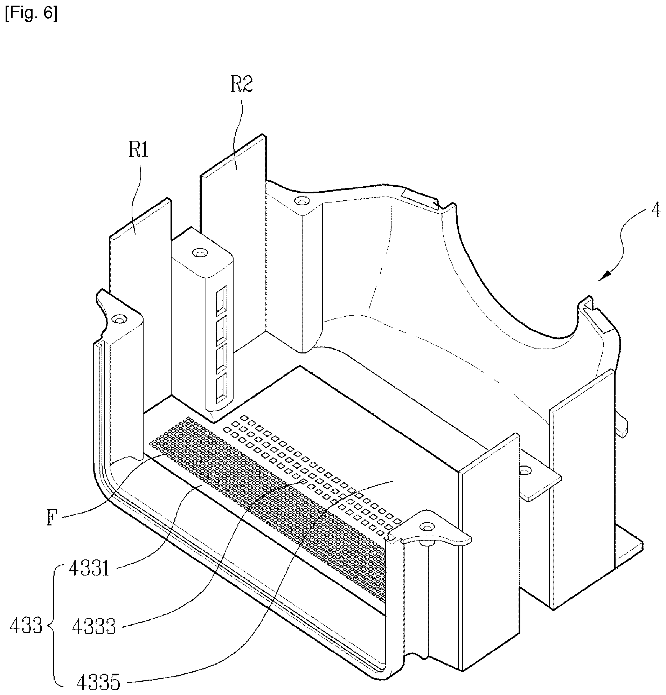

FIG. 6 is a perspective view of a housing 4 according to another embodiment of the present invention. The houssing 4 may be configured to maintain the evaporator 1, the condenser 2, and the fan 3 at fixed positions, and may provide an air path to introduce air into the heat pump module 100' and discharging air, having undergone heat exchange with the refrigerant, from the heat pump module 100'. The housing 4 may be connected, at one side thereof, to or may include the inlet duct 45 for introduction of air, and may be connected at the other side thereof, to or may include the outlet duct 47 for discharge of the heat-exchanged air.

The evaporator 1 and the condenser 2 may be sequentially arranged following the inlet duct 45. In addition, the evaporator 1 and the condenser 2 may be spaced apart from each other by a predetermined distance, enabling condensation and heating of the air passing through the housing 4.

The fan 3 may be arranged between the condenser 2 and the outlet duct 47. This arrangement may facilitate introduction/discharge of air through the inlet duct 45 and the outlet duct 47.

In the heat pump module 100' having the above described configuration, when air is introduced through one side of the housing 4 and undergoes heat exchange in the evaporator 1, moisture may be removed from the air introduced into the housing 4, forming condensed water on the surface of the evaporator 1. The condensed water formed on the surface of the evaporator 1 may disadvantageously deteriorate heat exchange efficiency of the air introduced into the housing 4 and may remain on the bottom surface of the housing 4. Although one might consider providing the housing 4 with a drain part for drainage of the condensed water, it may be difficult to separate the condensed water formed on the lower surface of the evaporator 1 so as to move the condensed water into the drain part formed in the housing 4.

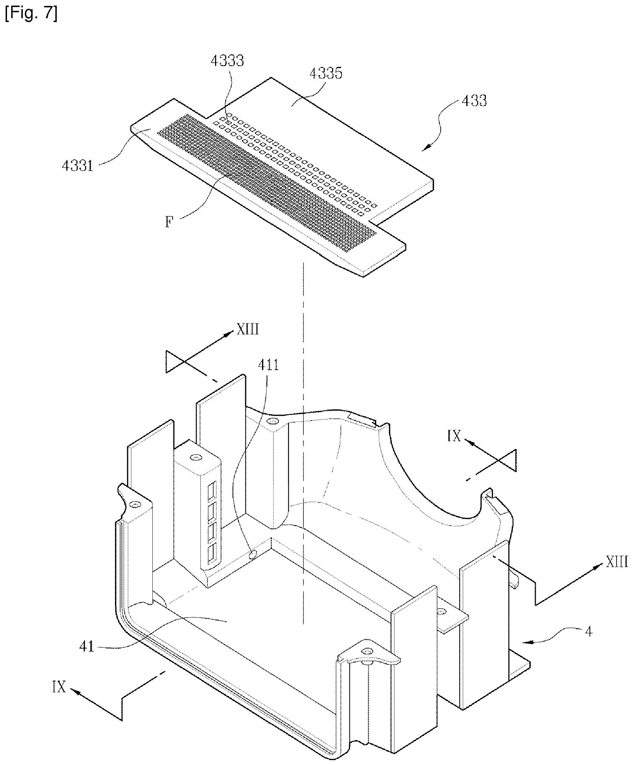

To solve the above described problem, the housing 4 provided in the heat pump module 100' according to this present embodiment may include the condensed water reservoir 41 and a condensed water guide in the form of a guide plate 433. Hereinafter, the condensed water reservoir 41 and the condensed water guide in the form of the guide plate 433 according to this embodiment will be described in more detail with reference to FIGS. 6-7. FIG. 6 is a perspective view of a housing according to another embodiment. FIG. 7 is an exploded perspective view of FIG. 6.

The condensed water reservoir 41 of the housing 4 may be indented or extend from a lower surface of the condenser 2, as well as the lower surface of the evaporator 1, and may serve to store the condensed water formed on the evaporator 1. The housing 4 may further include the drain part 411 formed in one side of the condensed water reservoir 41 to discharge the condensed water collected from the evaporator 1. Thereby, the condensed water stored in the condensed water reservoir 41 may be discharged out of the housing 4.

The bottom surface of the condensed water reservoir 41 may be inclined or slope downward toward the drain part 411 by a predetermined angle. This may serve to easily discharge the condensed water collected in the condensed water reservoir 41 out of the housing 4.

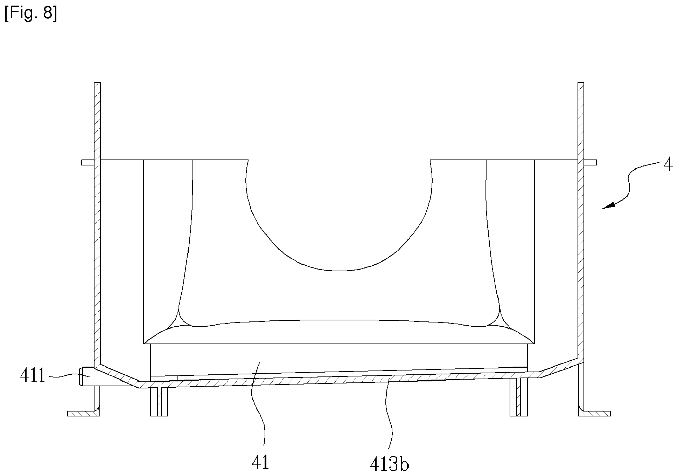

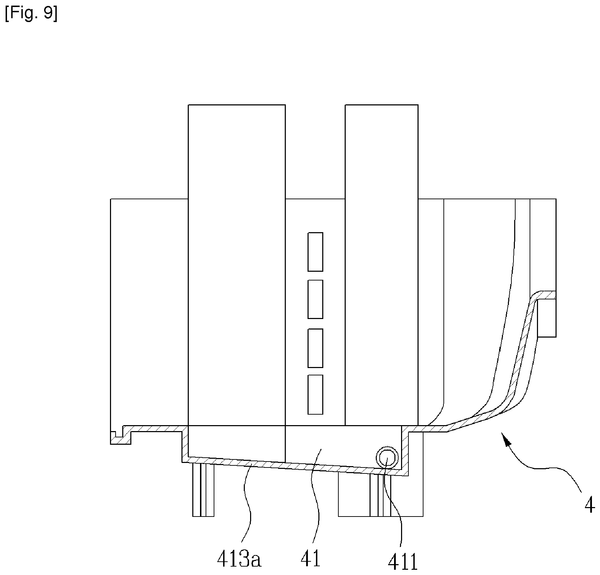

The slope defined at the condensed water reservoir 41 may be configured as shown in FIG. 9, such that the slope 413a extends in a longitudinal direction of the housing 4, or may be configured as shown in FIG. 8, such that the slope 413b extends in a transversal direction of the housing 4. Alternatively, slopes may extend in the longitudinal direction and the transversal direction of the housing 4. When the slope 413a and/or 413b are/is provided, for drainage of the condensed water, that the drain part 411 may be located at a lowest position of the slope 413a or 413b.

The guide plate 433, as shown in FIG. 6, may be configured to be seated on the condensed water reservoir 41 of the housing 4 and may serve to support the evaporator 1 and the condenser 2. The guide plate 433 may include an evaporator supporting portion 4331 positioned to support the evaporator 1, a condenser supporting portion 4335 positioned to support the condenser 2, and one or more barrier hole(s) 4333 between the evaporator supporting portion 4331 and the condenser supporting portion 4335.

The evaporator supporting portion 4331 may be configured to contact the lower surface of the evaporator 1, thereby serving to support the evaporator 1. The evaporator supporting portion 4331 may include a filtering part F to remove the condensed water formed on the surface of the evaporator 1 and foreign substances contained in the condensed water. The filtering part F may include a plurality of holes (filtering holes) perforated in the evaporator supporting portion 4331. Accordingly, the filtering part F may come into contact with the evaporator 1 so as to support the evaporator 1, and also, may function to allow the condensed water formed on the surface of the evaporator 1 to be collected in the condensed water reservoir 41 located under the filtering part F.

The filtering part F may filter foreign substances contained in the air, having undergone heat exchange in the evaporator 1, when the condensed water is introduced into the condensed water reservoir 41. Accordingly, as the foreign substances contained in the air may be introduced into the condensed water reservoir 41, it may be possible to prevent the drain part 411 from being clogged by the foreign substances introduced into the condensed water reservoir 41.

The barrier hole(s) 4333 may be provided between the filtering part F and the condenser supporting portion 4335, and may take the form of one or more holes perforated in the guide plate 433. This configuration may serve to prevent the condensed water removed from the evaporator 1 from entering the condenser 2 rather than being introduced into the condensed water reservoir 41 through the filtering part F.

The barrier hole(s) 4333 may be formed in an intermediate region of the guide plate 433 between the evaporator 1 and the condenser 2, and may have a larger diameter than a diameter of the plurality of holes of the filtering part F. The condenser supporting portion 4335 capable of supporting the condenser 2 may be arranged next to the barrier holes 4333.

Hereinafter, operational relationships of the constituent elements of the heat pump module 100 according to this embodiment will be described. Referring to FIG. 5, if the heat pump module 100 is operated for the purpose of drying air, the fan 3 may be operated, causing air to be introduced into the housing 4 through the inlet duct 45. When the air introduced into the housing 4 undergoes heat exchange in the evaporator 1, the air may be deprived of moisture, causing condensed water to be formed on the surface of the evaporator 1. The condensed water formed on the surface of the evaporator 1 may be collected in the condensed water reservoir 41 through the filtering part F of the guide plate 433 that comes into contact with the lower surface of the evaporator 1.

In this case, since the foreign substances, which have been introduced into the housing 4 along with the air and have been adsorbed in the condensed water, are filtered by the filtering part F, it may be possible to prevent the drain part 411 from being clogged by the foreign substances.

In addition, the barrier hole(s) 433 may prevent the condensed water removed from the surface of the evaporator 1 from being introduced into the condenser 2. Accordingly, it may be possible to prevent deterioration in the efficiency of the condenser 2 due to the condensed water.

The condensed water introduced into the condensed water reservoir 41 may be moved toward the drain part 411 of the housing 4 along the slope 413a and/or 413b of FIG. 8 or FIG. 9, thereby being discharged out of the housing 4 through the drain part 411.

As will be appreciated from FIG. 5, under operation of the fan 3, the heat-exchanged air having passed through the evaporator 1 may be introduced into the condenser 2 and then, may be discharged out of the heat pump module 100 through the outlet duct 47 after being heated.

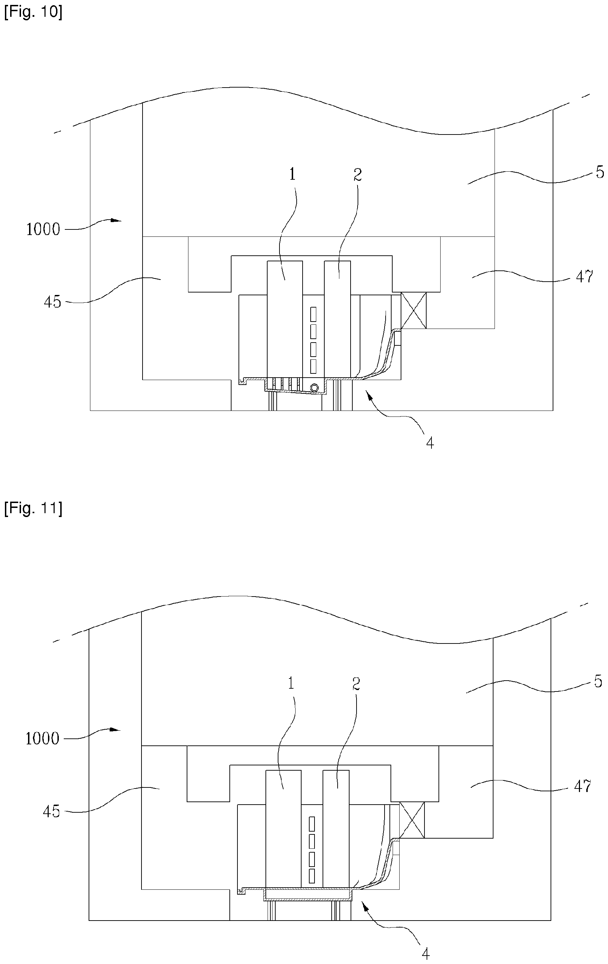

FIGs. 10 and 11 are conceptual views of a drying apparatus 1000 including the heat pump module 100 or 100' shown in FIG. 1 or FIG. 5. The drying apparatus 1000 according to embodiments may include a drying space 5 configured to receive and dry laundry therein, with the above described heat pump module being arranged in or adjacent to the drying space 5. In the drying apparatus 1000, the drying space 5 may be connected, at one side thereof, to the inlet duct 45 and, at the other side thereof, to the outlet duct 47.

Accordingly, the interior air of the drying space 5 may be introduced into the housing 4 through the inlet duct 45 and may undergo heat exchange in the heat pump module 100 or 100 shown in FIG. 1 or FIG. 5. The heat-exchanged high-temperature dry air may be introduced into the drying space 5 through the outlet duct 47, thereby serving to dry the laundry received in the drying space 5.

Alternatively, instead of arranging the heat pump module 100 or 100' in the interior of the drying space 5, the heat pump module 100 or 100' may be placed in a separate space regardless of the drying space 5 of the drying apparatus 1000. Arranging the heat pump module 100 or 100' within the drying apparatus 1000 to utilize any interior space close to the drying space 5 serves to prevent increase in the overall size of the drying apparatus 1000.

In the case where the heat pump module is placed in a separate space, the separate place may take the form of a drawer, so as to be pulled forward out of the drying apparatus 1000. If the heat pump module 100 or 100 malfunctions, the separate space may be pulled forward out of the drying apparatus 1000, enabling easy inspection of the heat pump module 100 or 100 and resulting in compact size of the drying apparatus 1000.

In this case, the inlet duct 43 and the outlet duct 47 may further include flexible tubes to assure communication with the drying space 5, even in the case where the separate space is pulled forward out of the drying apparatus 1000. This serves to prevent disconnection between the heat pump module 100 or 100' and the drying space 5 when the separate space, in which the heat pump module 100 or 100' is received, is pulled forward out of the drying apparatus 1000 or is pushed into the drying apparatus 1000. However, it is noted that another configuration for separating or connecting the inlet duct 45 and the outlet duct 47 from or to the drying space 5 when the separate space is pulled forward out of the drying apparatus or is pushed into the drying apparatus 1000 may be adopted.

Embodiments disclosed herein are directed to a heat pump module and a drying apparatus using the heat pump module that substantially obviate one or more problems due to limitations and disadvantages of the related art. That is, embodiments disclosed herein provide a heat pump module for drying clothes and a drying apparatus having the heat pump module same. Further, embodiments disclosed herein provide a heat pump module capable of easily removing condensed water formed on a surface of an evaporator and a drying apparatus having the heat pump module. Additionally, embodiments disclosed herein provide a heat pump module capable of easily discharging condensed water collected from an evaporator and a drying apparatus having the heat pump module.

Embodiments, as embodied and broadly described herein, may include a heat pump module comprising a housing, an evaporator provided in the housing that serves to condense air introduced into the housing via evaporation of refrigerant, a condenser provided in the housing that serves to heat the air having passed through the evaporator via condensation of the refrigerant, and a condensed water remover or guide provided in the housing that serves to remove condensed water generated on a surface of the evaporator therefrom while coming into contact with a lower surface of the evaporator.

The housing may further include a condensed water reservoir indented or extended from the lower surface of the evaporator to store the condensed water removed via the condensed water remover. The condensed water remover may take the form of a condensed water guide vertically extending between a bottom surface of the condensed water reservoir and the lower surface of the evaporator.

The housing may further include a drain part to discharge the condensed water, stored in the condensed water reservoir, out of the housing. The condensed water guide may include a communication part to allow the condensed water to be movable to the drain part.

The heat pump module may further include a condensed water reservoir provided in the housing and indented from the lower surface of the evaporator and a lower surface of the condenser, the condensed water reservoir serving to store the condensed water removed via the condensed water remover. The condensed water remover may take the form of a guide plate located above the condensed water reservoir to come into contact with the lower surface of the evaporator and the lower surface of the condenser.

The guide plate may include a filtering part to filter foreign substances contained in the condensed water and to allow the condensed water, from which the foreign substances have been filtered, to be collected in the condensed water reservoir. The filtering part may be positioned only at a region of the guide plate which comes into contact with the lower surface of the evaporator.

The guide plate may further include a barrier hole positioned between the evaporator and the condenser and serving to prevent the condensed water from coming into contact with the condenser. The filtering part may include a filtering hole, and the barrier hole may have a larger diameter than a diameter of the filtering hole.

In accordance with another embodiment, a drying apparatus may be provided which may include a drying space, in which laundry is dried, a housing that communicates with the drying space, an evaporator provided in the housing that serves to condense highly humid air introduced from the drying space into the housing via evaporation of refrigerant, a condenser provided in the housing that serves to heat the air having passed through the evaporator via condensation of the refrigerant, a fan provided in the housing that serves to introduce the air having passed through the condenser into the drying space, and a condensed water remover provided in the housing that serves to remove condensed water generated on a surface of the evaporator therefrom while coming into contact with a lower surface of the evaporator.

Any reference in this specification to "one embodiment", "an embodiment", "example embodiment". etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A heat pump module (100), comprising:
a housing (4);
an evaporator (1) provided in the housing (4) that condenses air, introduced into the housing, via evaporation of a refrigerant;
a condenser (2) provided in the housing (4) that heats the air, having passed through the evaporator (1), via condensation of the refrigerant;
at least one condensed water guide (431) provided in the housing (4) that removes condensed water generated on a surface of the evaporator (1) therefrom;and
a condensed water reservoir (41) provided in the housing (4) and indented from the lower surface of the evaporator and a lower surface of the condenser (2), the condensed water reservoir (41) serving to store the condensed water removed via the at least one condensed water guide (431),
wherein the at least one condensed water guide (431) comprises a guide plate (433) located above the condensed water reservoir (41) in contact with a lower surface of the evaporator (1) and a lower surface of the condenser (2).
wherein the guide plate (433) includes:
an evaporator supporting portion (4331) contacting the lower surface of the evaporator (1) to support the evaporator (1), the evaporator supporting portion (4331) including a filtering part (F) that filters foreign substances contained in the condensed water and allows the condensed water, from which the foreign substances have been filtered, to be collected in the condensed water reservoir (41);
a condenser supporting portion (4335) contacting the lower surface of the condenser (2) to support the condenser (2); **characterized by** at least one barrier hole (4333) positioned between the evaporator supporting portion (4331) and the condenser supporting portion (4335) to prevent the condensed water removed from the surface of the evaporator (1) from being introduced into the condenser(2),
and wherein the filtering part (F) includes a filtering hole, and the at least one barrier hole (4333) has a larger diameter than a diameter of the filtering hole.

2. The heat pump module (100) according to claim 1, wherein the condensed water guide (431) is formed integral with the housing (4) or separate from the housing (4).

3. The heat pump module (100) according to claims 1 or 2, wherein the filtering part (F) is positioned only at a region of the guide plate (433) that contacts the lower surface of the evaporator (1).

4. The heat pump module (100) of any one of claims 1 to 3, wherein the lower surface of the condensed water reservoir (41) is sloped in at least one direction.

5. The heat pump module (100) according to any one of claims 1 to 4, wherein the housing (4) further includes a drain part (411) that discharges the condensed water, stored in the condensed water reservoir (41), out of the housing (4).

6. A drying apparatus (1000), comprising the heat pump module (100) of any one of claims 1 to 5, the drying apparatus (1000) further comprising:
a drying space (5), in which laundry is dried; and
a fan provided in the housing (4) that introduces the air, having passed through the condenser (2), into the drying space(5).

## Patentansprüche

1. Wärmepumpenmodul (100), das aufweist:
ein Gehäuse (4);
einen Verdampfer (1), der in dem Gehäuse (4) bereitgestellt ist, der Luft, die in das Gehäuse eingeleitet wird, über die Verdampfung eines Kältemittels kondensiert;
einen Kondensator (2), der in dem Gehäuse (4) bereitgestellt ist, der die Luft, die den Verdampfer (1) durchlaufen hat, über die Kondensation des Kältemittels heizt;
wenigstens eine Kondenswasserführung (431), die in dem Gehäuse (4) bereitgestellt ist, die Kondenswasser, das auf einer Oberfläche des Verdampfers (1) erzeugt wird, davon entfernt; und
einen Kondenswassersammelbehälter (41), der in dem Gehäuse (4) bereitgestellt ist und von der unteren Oberfläche des Verdampfers und einer unteren Oberfläche des Kondensators (2) eingerückt ist, wobei der Kondenswassersammelbehälter (41) dazu dient, das über die wenigstens eine Kondenswasserführung (431) entfernte Kondenswasser zu lagern,
wobei die wenigstens eine Kondenswasserführung (431) eine Leitplatte (433) aufweist, die oberhalb des Kondenswassersammelbehälters (41) in Kontakt mit einer unteren Oberfläche des Verdampfers (1) und einer unteren Oberfläche des Kondensators (2) ist,
wobei die Leitplatte (433) umfasst:
einen Verdampferhalteabschnitt (4331), der die untere Oberfläche des Verdampfers (1) berührt, um den Verdampfer (1) zu halten, wobei der Verdampferhalteabschnitt (4331) einen Filterteil (F) umfasst, der Fremdkörper, die in dem Kondenswasser enthalten sind, filtert und zulässt, dass das Kondenswasser, aus dem die Fremdkörper gefiltert wurden, in dem Kondenswassersammelbehälter (41) gesammelt werden;
einen Kondensatorhalteabschnitt (4335), der die untere Oberfläche des Kondensators (2) berührt, um den Kondensator (2) zu halten;
**gekennzeichnet durch**
wenigstens ein Barrierenloch (4333), das zwischen dem Verdampferhalteabschnitt (4331) und dem Kondensatorhalteabschnitt (4335) positioniert ist, um zu verhindern, dass das von der Oberfläche des Verdampfers (1) entfernte Kondenswasser in den Kondensator (2) eingeleitet wird,
und wobei der Filterteil (F) ein Filterloch umfasst und das wenigstens eine Barrierenloch (4333) einen größeren Durchmesser als einen Durchmesser des Filterlochs hat.

2. Wärmepumpenmodul (100) nach Anspruch 1, wobei die Kondenswasserführung (431) integral mit dem Gehäuse (4) oder getrennt von dem Gehäuse (4) ausgebildet ist.

3. Wärmepumpenmodul (100) nach den Ansprüchen 1 oder 2, wobei der Filterteil (F) nur in einem Bereich der Leitplatte (433) positioniert ist, der die untere Oberfläche des Verdampfers (1) berührt.

4. Wärmepumpenmodul (100) nach einem der Ansprüche 1 bis 3, wobei die untere Oberfläche des Kondenswassersammelbehälters (41) in wenigstens eine Richtung geneigt ist.

5. Wärmepumpenmodul (100) nach einem der Ansprüche 1 bis 4, wobei das Gehäuse (4) ferner einen Ableitteil (411) umfasst, der das in dem Kondenswassersammelbehälter (41) gelagerte Kondenswasser aus dem Gehäuse (4) ableitet.

6. Trocknungsvorrichtung (1000), die das Wärmepumpenmodul (100) nach einem der Ansprüche 1 bis 5 aufweist, wobei die Trocknungsvorrichtung (1000) ferner aufweist:
einen Trocknungsraum (5), in dem Wäsche getrocknet wird; und
einen Ventilator, der in dem Gehäuse (4) bereitgestellt ist, der Luft, die den Kondensator (2) durchlaufen hat, in den Trocknungsraum (5) einleitet.

## Revendications

1. Module de pompe à chaleur (100), comprenant :
un boîtier (4) ;
un évaporateur (1) prévu dans le boîtier (4) qui condense l'air, introduit dans le boîtier, par évaporation d'un fluide frigorigène ;
un condenseur (2) prévu dans le boîtier (4) qui chauffe l'air, ayant traversé l'évaporateur (1), par condensation du fluide frigorigène ;
au moins un guide d'eau condensée (431) prévu dans le boîtier (4) qui en élimine l'eau condensée générée sur une surface de l'évaporateur (1) ; et
un réservoir d'eau condensée (41) prévu dans le boîtier (4) et en retrait de la surface inférieure de l'évaporateur et d'une surface inférieure du condenseur (2), le réservoir d'eau condensée (41) servant à stocker l'eau condensée éliminée par l'intermédiaire de l'au moins un guide d'eau condensée (431),
dans lequel l'au moins un guide d'eau condensée (431) comprend une plaque de guidage (433) située au-dessus du réservoir d'eau condensée (41) en contact avec une surface inférieure de l'évaporateur (1) et une surface inférieure du condenseur (2),
dans lequel la plaque de guidage (433) comporte :
une portion de support d'évaporateur (4331) venant en contact avec la surface inférieure de l'évaporateur (1) pour supporter l'évaporateur (1), la portion de support d'évaporateur (4331) comportant une partie de filtration (F) qui filtre des substances étrangères contenues dans l'eau condensée et permet de recueillir l'eau condensée, d'où les substances étrangères ont été filtrées, dans le réservoir d'eau condensée (41) ;
une portion de support de condenseur (4335) venant en contact avec la surface inférieure du condenseur (2) pour supporter le condenseur (2) ; **caractérisé par**
au moins un trou barrière (4333) positionné entre la portion de support d'évaporateur (4331) et la portion de support de condenseur (4335) pour empêcher l'eau condensée éliminée de la surface de l'évaporateur (1) d'être introduite dans le condenseur (2),
et dans lequel la partie de filtration (F) comporte un trou de filtration, et l'au moins un trou barrière (4333) a un diamètre plus grand qu'un diamètre du trou de filtration.

2. Module de pompe à chaleur (100) selon la revendication 1, dans lequel le guide d'eau condensée (431) est formé d'un seul tenant avec le boîtier (4) ou séparé du boîtier (4).

3. Module de pompe à chaleur (100) selon les revendications 1 ou 2, dans lequel la partie de filtration (F) est positionnée uniquement au niveau d'une région de la plaque de guidage (433) qui vient en contact avec la surface inférieure de l'évaporateur (1).

4. Module de pompe à chaleur (100) selon l'une quelconque des revendications 1 à 3, dans lequel la surface inférieure du réservoir d'eau condensée (41) est inclinée dans au moins une direction.

5. Module de pompe à chaleur (100) selon l'une quelconque des revendications 1 à 4, dans lequel le boîtier (4) comporte en outre une partie d'évacuation (411) qui évacue l'eau condensée, stockée dans le réservoir d'eau condensée (41), hors du boîtier (4).

6. Appareil de séchage (1000), comprenant le module de pompe à chaleur (100) de l'une quelconque des revendications 1 à 5, l'appareil de séchage (1000) comprenant en outre :
un espace de séchage (5), dans lequel du linge est séché ; et
un ventilateur prévu dans le boîtier (4) qui introduit l'air, ayant traversé le condenseur (2), dans l'espace de séchage (5).
